# EUROPEAN PATENT APPLICATION

(11) **EP 4 611 230 A1**
(43) Date of publication of application: **03.09.2025**
(21) Application number: 25154728.7
(22) Date of filing: 29.01.2025
(51) Int. Cl.: H02K 5/15, H02K 5/22, H02K 7/00, H02K 11/225, H02K 11/25

(54) **VEHICLE DRIVE SYSTEM**

(30) Priority: 01.03.2024 JP 2024031405
(71) Applicant: MAZDA MOTOR CORPORATION, Hiroshima 730-8670 (JP)
(72) Inventor: Imura, Arashi, Aki-gun, Hiroshima, 730-8670 (JP); Nakano, Atsushi, Aki-gun, Hiroshima, 730-8670 (JP)
(74) Representative: Laufhütte, Dieter

(57) **Abstract**

A vehicle drive system including a motor, a temperature sensor, and a resolver includes a motor housing accommodating the motor, the temperature sensor, and the resolver, a cover member covering the motor housing from one side in a motor axial direction, and temperature sensor and resolver harnesses connected to the temperature sensor and the resolver, respectively. The temperature sensor harness and the resolver harness are integrally provided inside the motor housing. The motor housing has a window through which a collective harness of the temperature sensor harness and the resolver harness passes. An external connector connectable to an external harness is attached to the cover member to pass through the cover member. The external connector is connected to a tip-end part of the collective harness.

## Description

The present disclosure relates to a vehicle drive system which is installed in a vehicle.

For example, JP7083298B discloses a vehicle provided with a motor for driving wheels. This motor is an in-wheel motor built into a wheel hub, provided with a hollow shaft which rotates with a rotor, and a sensor which detects a rotational position of the rotor. A harness of the sensor is inserted through the hollow shaft and extends to the outside of the motor to be connected to a control board.

Meanwhile, an internal temperature state and a rotation state of the motor are used as part of information when controlling the motor. In order to detect the internal temperature of the motor as accurately as possible, it is necessary to place a temperature sensor inside a housing which accommodates the motor. Placing the temperature sensor inside the housing allows the sensor to be protected from an external environment, such as water and dust, which is thought to reduce issues like deterioration over time. Further, it is desired to place a resolver for detecting the rotation state of the motor inside the housing, in order to protect the resolver from the external environment.

When the temperature sensor and the resolver are placed inside the housing, harnesses extending from the temperature sensor and the resolver needs to be routed outside the housing. In this regard, JP7083298B routes the harness of the sensor through the hollow shaft to extend it outside. However, when the adoption of such a hollow shaft structure is difficult, how to route the harness outside the housing becomes an issue. In particular, since the temperature sensor and the resolver are positioned at different locations, it may be challenging to adopt a layout where both the harness of the temperature sensor and the harness of the resolver pass through the hollow shaft as disclosed in JP7083298B.

The present disclosure is made in view of the above situations, and aims to output detection signals from a temperature sensor and a resolver to the outside of a housing, without adopting a hollow shaft structure, while facilitating a layout of a plurality of harnesses.

A vehicle drive system including a motor, a temperature sensor configured to detect a temperature state of the motor, and a resolver configured to detect a rotation state of the motor is provided, which includes a motor housing accommodating the motor, the temperature sensor, and the resolver, a cover member covering the motor housing from one side in an axial direction of a motor rotation shaft, a temperature sensor harness connected to the temperature sensor, and a resolver harness connected to the resolver. The temperature sensor harness and the resolver harness are integrally provided inside the motor housing. The motor housing includes a window through which a collective harness of the temperature sensor harness and the resolver harness passes. An external connector connectable to an external harness is attached to the cover member to pass through the cover member. The external connector is connected to a tip-end part of the collective harness.

The motor housing may include a housing-side vertical wall part extending in a radial direction of the motor rotation shaft, and a housing-side circumferential wall part projecting in the axial direction of the motor rotation shaft from a circumferential edge portion of the housing-side vertical wall part to extend annularly. The window may be formed in the housing-side vertical wall part.

The housing-side circumferential wall part may include an opening section openable and closable by a lid member. A coupling part may integrally provide the temperature sensor harness and the resolver harness inside the motor housing.

The resolver may be accommodated inside the motor housing on a cover member side. The temperature sensor may be accommodated inside the motor housing on an opposite side from the cover member.

The coupling part may be provided to an intermediate part of the temperature sensor harness.

The cover member may include a cover-side vertical wall part extending in the radial direction of the motor rotation shaft and a cover-side circumferential wall part extending in a circumferential direction of the motor rotation shaft. The external connector may be attached to the cover-side circumferential wall part to pass therethrough.

The cover member may accommodate a transmission thereinside.

### BRIEF DESCRIPTION OF DRAWINGS

Fig. 1 is a front perspective view of a vehicle drive system.
Fig. 2 is a front view of the vehicle drive system.
Fig. 3 is a schematic cross-sectional view taken along a line III-III in Fig. 2.
Fig. 4 is an upper-left perspective view illustrating a disassembled state of a right cover member and a motor housing.

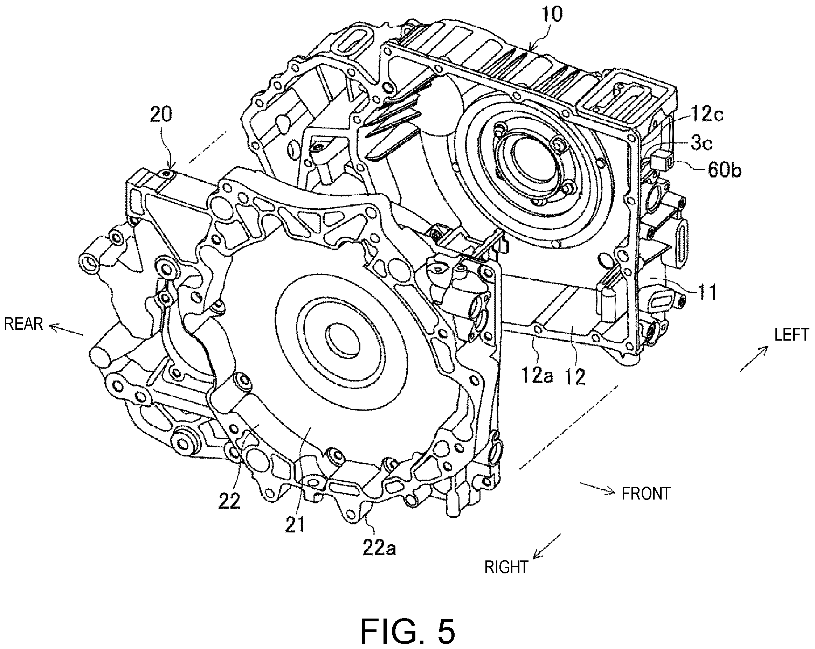

Fig. 5 is an upper-right perspective view illustrating the disassembled state of the right cover member and the motor housing.
Fig. 6 is a view indicating a state before the right cover member is assembled to the motor housing.

### DETAILED DESCRIPTION OF THE DISCLOSURE

Hereinafter, one embodiment of the present disclosure will be described in detail with reference to the accompanying drawings. Note that the following description of this embodiment is merely illustrative in nature and is not intended to limit the present disclosure, its applications, or uses.

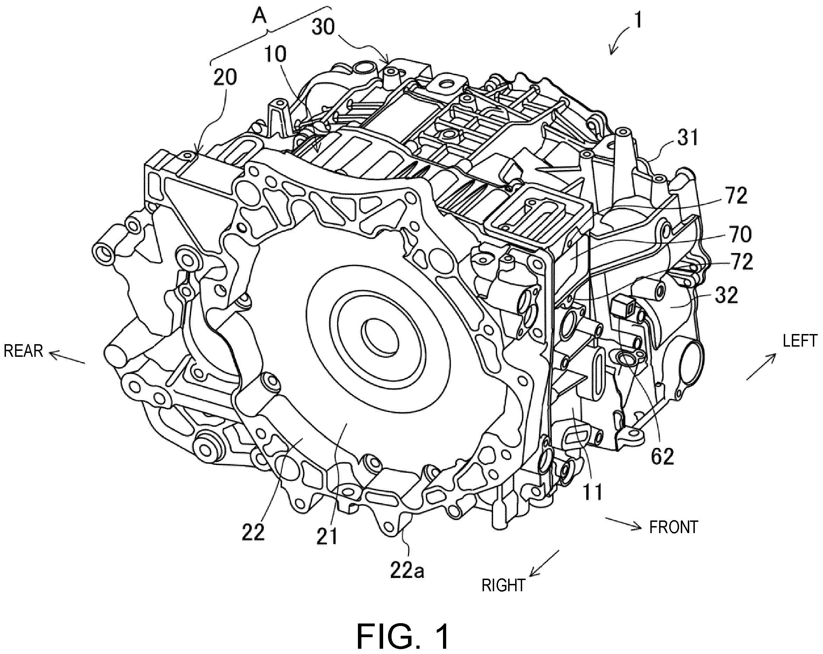

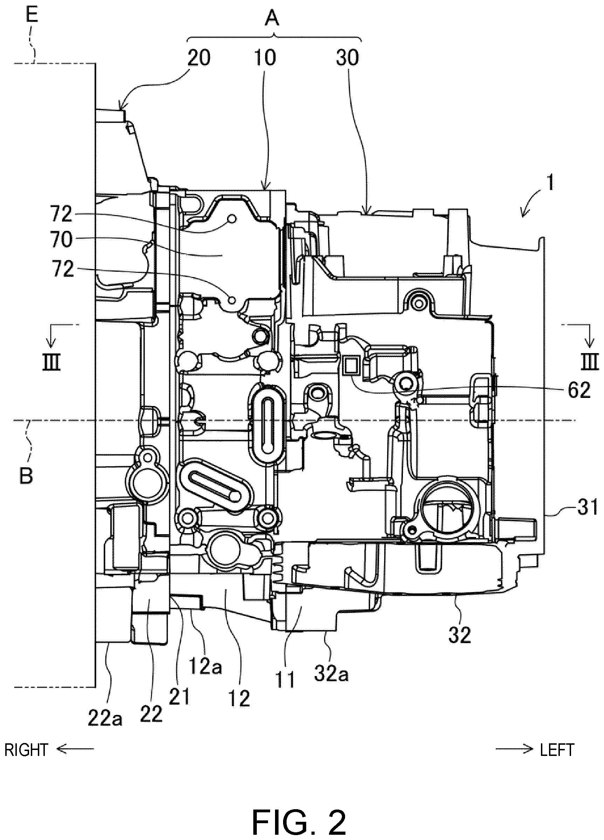

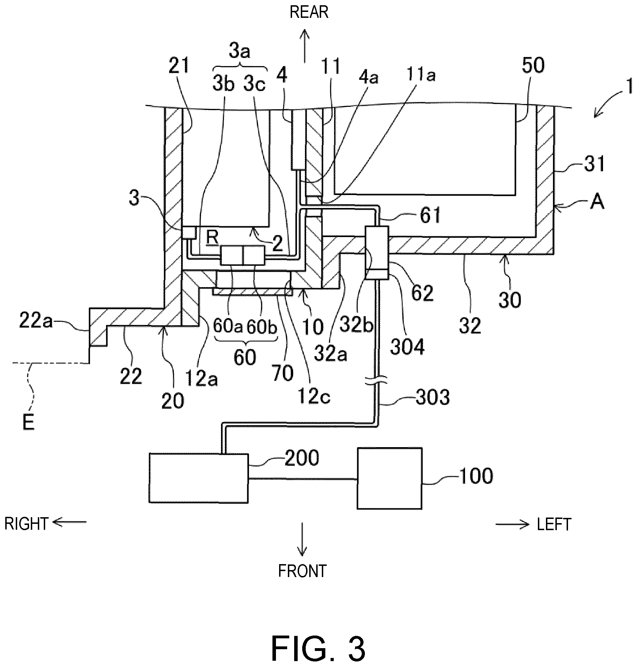

Figs. 1 and 2 illustrate a vehicle drive system 1 according to one embodiment of the present disclosure. The vehicle drive system 1 is mounted on an automobile (not illustrated) and propels driving wheels of the automobile. The automobile may be an electric vehicle which travels solely on power of a motor or a hybrid vehicle which uses both an internal combustion engine and the motor. The motor for generating the power to drive the drive wheels is a drive motor. The hybrid vehicle may be a plug-in hybrid vehicle which is chargeable from an external power source. In this embodiment, the explanation is given for a case where a vehicle on which the vehicle drive system 1 is installed is the hybrid vehicle. Therefore, as illustrated in Fig. 3, although the automobile on which the vehicle drive system 1 is installed is also equipped with a drive battery 100 which supplies power to a motor 2 and a controller 200 which controls the motor 2, since they are conventionally well-known, the detailed description thereof is omitted. The controller 200 includes, for example, an inverter circuit.

The vehicle drive system 1 is mounted, for example, in an engine compartment of the automobile. The engine compartment may be located in a front or rear part of the automobile. Front, rear, left, and right directions are defined as illustrated in each drawing. That is, with reference to the state where the vehicle drive system 1 is mounted in the engine compartment of the automobile, the front side of the vehicle is simply referred to as "front," the rear side of the vehicle is simply referred to as "rear," the left side of the vehicle is simply referred to as "left," and the right side of the vehicle is simply referred to as "right." A left-and-right direction of the vehicle corresponds to a width direction of the vehicle. This definition of the directions is solely for the convenience in describing the embodiment and does not limit the present disclosure.

As partially illustrated by virtual lines in Fig. 2, an engine E is disposed inside the engine compartment, on the right side of the vehicle drive system 1. A crankshaft (not illustrated) of the engine E extends in the left-and-right direction, that is, the engine E is a so-called transverse engine. The engine E and the vehicle drive system 1 are arranged side by side in the left-and-right direction, the vehicle drive system 1 is disposed on the left side of the engine E, and a left part of the engine E is coupled to a right part of the vehicle drive system 1 by a fastening member (not illustrated). The power outputted from the crankshaft of the engine E is inputted to the vehicle drive system 1. Note that the left and right positional relationship may be reversed, and the arranged direction of the engine E and the vehicle drive system 1 is not particularly restricted. In the case of an electric vehicle, since the engine E is not installed, the engine compartment is referred to as a motor compartment.

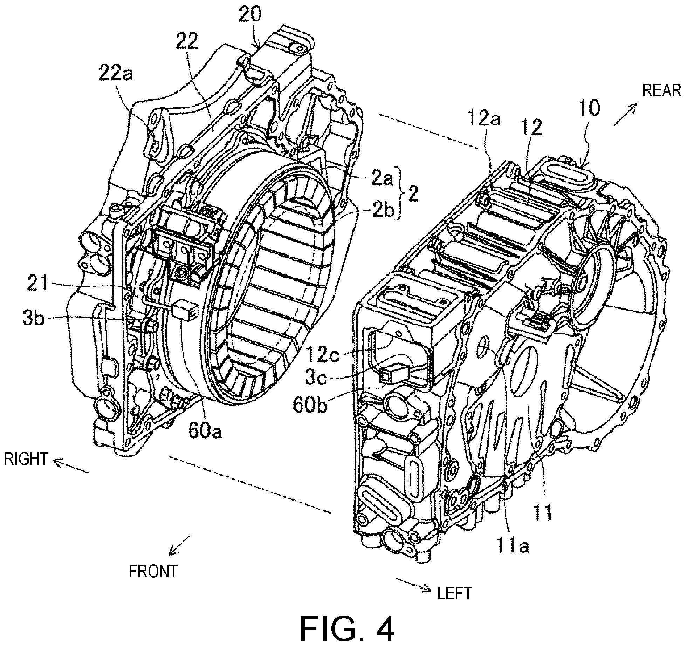

Fig. 3 schematically illustrates a cross section of the vehicle drive system 1. As illustrated in Fig. 3, the vehicle drive system 1 includes the motor 2, a temperature sensor 3 which detects a temperature of the motor 2, and a resolver 4 which detects a rotation state of the motor 2. As illustrated in Fig. 4, the motor 2 includes a stator 2a and a rotor 2b (only an outer circumference thereof is partially illustrated by a virtual line). The core of a rotation shaft of the motor 2 (motor rotation shaft) is denoted by a reference character B in Fig. 2. A mounting direction of the vehicle drive system 1 in the vehicle is set so that a motor rotation shaft direction aligns with the left-and-right direction. Therefore, an axis core direction of the crankshaft of the engine E matches the motor rotation shaft direction.

The temperature sensor 3 is, for example, comprised of a thermistor and is disposed close to the stator 2a of the motor 2 in order to immediately detect a temperature change in the stator 2a. The temperature sensor 3 constantly outputs a detection signal. The resolver 4 is a rotational angle detection sensor which detects a rotational angle of the rotor 2b. The temperature sensor 3 and the resolver 4 may be of any commonly known type.

The vehicle drive system 1 also includes a motor housing 10, a right cover member 20, and a left cover member 30. The motor housing 10, the right cover member 20, and the left cover member 30 are each made of lightweight alloy, such as an aluminum alloy, providing high rigidity. Although in this embodiment the right and left cover members 20 and 30 are named this way since they are disposed on the respective right and left sides, without limiting to this, the right cover member 20 may be referred to as a front cover member and the left cover member 30 as a rear cover member. The right cover member 20 is a first cover member, and the left cover member 30 is a second cover member.

The motor housing 10, the right cover member 20, and the left cover member 30 form a single case A. The right cover member 20 is positioned on the right side of the case A to constitute a right part of the case A, and thus may also be referred to as a "right-side component." The left cover member 30 is positioned on the left side of the case A to constitute a left part of the case A, and thus may also be referred to as a "leftside component." The motor housing 10 is positioned between the right and left cover members 20 and 30 to constitute an intermediate part of the case A in the left-and-right direction, and thus may also be referred to as an "intermediate component." The motor housing 10 is sandwiched in the left-and-right direction by the right and left cover members 20 and 30. The structure of the case A is not limited to the above structure and may include additional component(s).

The motor housing 10 forms a single accommodation space R (illustrated in Fig. 3). The motor 2, the temperature sensor 3, and the resolver 4 are accommodated inside the single accommodation space R. The motor housing 10 includes a housing-side vertical wall part 11 and a housing-side circumferential wall part 12, which are integrally molded. The housing-side vertical wall part 11 is positioned at a left end part of the motor housing 10 and is an end wall part extending in a radial direction (up-and-down and front-and-rear directions) of the motor rotation shaft. The housing-side circumferential wall part 12 projects rightward along the motor rotation shaft direction from a circumferential edge portion of the housing-side vertical wall part 11 and extends continuously in a circumferential direction of the motor rotation shaft to form an annular wall part. In a tip end portion (right end portion) of the housing-side circumferential wall part 12, a housing-side fastening portion 12a protruding radially outward is formed. The housing-side fastening portion 12a is joined to the right cover member 20 by a fastening member (not illustrated).

The motor 2 is positioned inside the housing-side circumferential wall part 12. An output combining mechanism (not illustrated) for combining the output of the engine E with the output of the motor 2 (rotational force of the rotor 2b) is provided inside the rotor 2b (illustrated by virtual lines in Fig. 4). The output combining mechanism is capable of inputting only the output of the engine E, only the output of the motor 2, or a combination of the outputs of the engine E and the motor 2 at an arbitrary ratio, to a subsequent transmission 50 (illustrated in Fig. 3). The structure of the output combining mechanism is not particularly limited and may apply a conventionally well-known mechanism used in hybrid vehicles. The control of the output combining mechanism may also use a conventionally well-known method.

The housing-side vertical wall part 11 is located in the left end part of the motor housing 10, as the end wall part. However, since no end wall part is formed in the right end part of the motor housing 10, the motor housing 10 has a structure where it has an opening formed in the right direction (one side in the motor rotation shaft direction). Since the accommodation space R opens in the right direction of the motor housing 10, the opening of the motor housing 10 is covered by the right cover member 20 from the right side.

The right cover member 20 includes a right cover-side vertical wall part 21 and a right cover-side circumferential wall part 22, which are integrally molded. The right cover-side vertical wall part 21 is an end wall part located in a left end part of the right cover member 20 and extending in the radial direction (up-and-down and front-and-rear directions) of the motor rotation shaft to cover the opening of the motor housing 10. The housing-side fastening portion 12a is joined to the right cover-side vertical wall part 21 to close the opening of the motor housing 10.

The right cover-side circumferential wall part 22 projects from a circumferential edge portion of the right cover-side vertical wall part 21 in the motor rotation shaft direction and extends continuously in the circumferential direction of the motor rotation shaft to form an annular wall part. In a tip end portion (right end portion) of the right cover-side circumferential wall part 22, a right cover-side fastening portion 22a protruding radially outward is formed. The right cover-side fastening portion 22a is connected to the engine E by a fastening member (not illustrated).

The left cover member 30 is attached to the motor housing 10 at the opposite side (left side) from the opening and includes a left cover-side vertical wall part 31 and a left cover-side circumferential wall part 32, which are integrally molded. The left cover-side vertical wall part 31 is an end wall part located in a left end part of the left cover member 30 and extending in the radial direction (up-and-down and front-and-rear directions) of the motor rotation shaft.

The left cover-side circumferential wall part 32 projects from a circumferential edge portion of the left cover-side vertical wall part 31 in the motor rotation shaft direction and extends continuously in the circumferential direction of the motor rotation shaft to form an annular wall part. In a tip end portion (right end portion) of the left cover-side circumferential wall part 32, a left cover-side fastening portion 32a protruding radially outward is formed. The left cover-side fastening portion 32a is coupled to the housing-side vertical wall part 11 of the motor housing 10 by a fastening member (not illustrated).

The transmission 50 is accommodated inside the left cover-side circumferential wall part 32. The rotational force outputted from the output combining mechanism accommodated in the motor housing 10 is inputted to the transmission 50 to be decelerated or accelerated and then be outputted. The output of the transmission 50 is transmitted to the drive wheels via a final gear and a drive shaft (not illustrated).

The temperature sensor 3 and the resolver 4 are spaced apart in the motor rotation shaft direction. The temperature sensor 3 is accommodated inside the motor housing 10 near the right cover-side vertical wall part 21 and, in this embodiment, is fixed by being fastened to the right cover-side vertical wall part 21. The resolver 4 is accommodated inside the motor housing 10 on the opposite side from the right cover-side vertical wall part 21 and is fixed by being fastened to the housing-side vertical wall part 11. Thus, the temperature sensor 3 is accommodated on the right side of the accommodation space R and the resolver 4 is accommodated on the left side of the accommodation space R.

The vehicle drive system 1 further includes a temperature sensor harness 3a connected at its base end part (one end part) to the temperature sensor 3, and a resolver harness 4a connected at its base end part (one end part) to the resolver 4. The temperature sensor harness 3a contains a signal line which transmits the detection signal of the temperature sensor 3 to the controller 200 located outside the case A. The resolver harness 4a contains a signal line which transmits the detection signal of the resolver 4 to the controller 200.

The temperature sensor harness 3a and the resolver harness 4a are integrally provided inside the motor housing 10. Specifically, a coupling part 60 which integrates the temperature sensor harness 3a and the resolver harness 4a is provided inside the motor housing 10. The coupling part 60 is provided in an intermediate part of the temperature sensor harness 3a. The temperature sensor harness 3a is divided into a base-end harness 3b located on the temperature sensor 3 side, and a tip-end harness 3c located on a tip end side, from the coupling part 60.

The coupling part 60 has a base-end connector 60a connected to a tip end part of the base-end harness 3b, and a tip-end connector 60b connected to a base-end part of the tip-end harness 3c. One of the base-end connector 60a and the tip-end connector 60b is a female connector and the other one is a male connector. By coupling the base-end connector 60a to the tip-end connector 60b, the base-end harness 3b is conductively connected to the tip-end harness 3c.

The vehicle drive system 1 further includes a collective harness 61 configured by collecting the temperature sensor harness 3a and the resolver harness 4a together. Specifically, the collective harness 61 is formed by collecting the tip-end harness 3c of the temperature sensor harness 3a and the resolver harness 4a.

The motor housing 10 has on the left cover member 30 side a window 11a through which the collective harness 61 passes. Specifically, the window 11a is located in a front portion of the housing-side vertical wall part 11, and is formed to extend through the housing-side vertical wall part 11 in the thickness direction (left-and-right direction). Forming the window 11a allows the collective harness 61 (the tip-end harness 3c and the resolver harness 4a) to be routed from the inside of the motor housing 10 to the inside of the left cover member 30. An inner surface of the window 11a and the collective harness 61 can be sealed therebetween with a sealing material.

An external connector 62 connectable to an external harness 303 is attached to the left cover member 30 to pass therethrough. Specifically, the left cover-side circumferential wall part 32 has a connector attachment hole 32b extending through the left cover-side circumferential wall part 32 in the thickness (radial) direction. The external connector 62 is fixed to the left cover-side circumferential wall part 32 in a state where it is inserted into the connector attachment hole 32b.

A tip end part (other end part) of the collective harness 61 is connected to the external connector 62. The external connector 62 is connectable to the external harness 303. The side of the external connector 62 connected to the external harness 303 faces forward. This connection side may alternatively face upward, downward, or rearward.

The external harness 303 contains a signal line for transmitting the detection signals of the temperature sensor 3 and the resolver 4 to the controller 200. A connector 304 connected to the external connector 62 is provided in an end part of the external harness 303. Since the connector 304 is connected to a front part of the external connector 62, a rear part of the connector 304 is connected to the external connector 62. Either of the external connector 62 and the second connector 304 may be a female or male connector.

For example, one of the external connector 62 and the connector 304 may have an insertion port to be a female connector, and the other one of the external connector 62 and the connector 304 may have an inserting part to be inserted into the insertion port, to be a male connector. If the external connector 62 has the insertion port, the arrangement of the external connector 62 may be determined so that the insertion port faces forward. In this case, by inserting the inserting part formed in the connector 304 into the insertion port of the external connector 62 from its front side, the connector 304 can be connected to the external connector 62. Conversely, if the external connector 62 has the inserting part, the arrangement of the external connector 62 may be determined so that the inserting part projects forward.

The housing-side circumferential wall part 12 of the motor housing 10 has an opening section 12c which is opened and closed by a lid member 70. The opening section 12c is a penetration hole through a front portion of the housing-side circumferential part 12 in the thickness direction (front-and-rear direction). The lid member 70 is disposed outside the housing-side circumferential wall part 12, and the opening section 12c can be closed from the outside of the housing-side circumferential wall part 12. The lid member 70 is fixed to an outer surface of the housing-side circumferential wall part 12 by being fastened with a fastening member 72 (illustrated in Fig. 2, etc.).

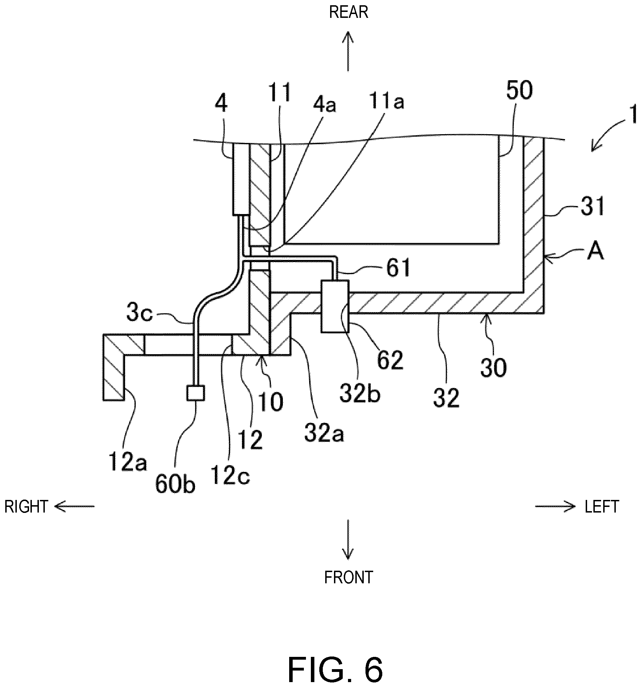

As illustrated in Figs. 4 and 6, before the right cover member 20 is attached to the motor housing 10, the lid member 70 is not attached to the housing-side circumferential wall part 12 and the opening section 12 is uncovered. Further, the base-end connector 60a and the tip-end connector 60b are disassembled from each other and the tip-end connector 60b is held to a circumferential edge portion of the opening section 12c of the motor housing 10 in a state where it projects outside the motor housing 10 from the opening section 12c.

After holding the tip-end connector 60b to the circumferential edge portion of the opening section 12c of the motor housing 10, the right cover member 20 is attached to the motor housing 10. Then, an operator is able to couple the tip-end connector 60b to the base-end connector 60a within the opening section 12c. After coupling the tip-end connector 60b to the base-end connector 60a, the coupling part 60 is placed inside the motor housing 10, and the lid member 70 is fixed to the outer surface of the housing-side circumferential wall part 12 by being fastened with the fastening member 72. Thus, by forming the opening section 12c which is openable/closable, the base-end connector 60a and the tip-end connector 60b can easily be coupled to each other.

### Operation and Effect(s) of Embodiment

As described above, according to this embodiment, since the temperature sensor 3 for detecting the temperature state of the motor 2 is provided inside the motor housing 10, the temperature state of the motor 2 may accurately be detected. Since the temperature sensor harness 3a, which is connected to the temperature sensor 3, is integrally provided inside the motor housing 10 with the resolver harness 4a, which is connected to the resolver 4, by the coupling part 60, the temperature sensor harness 3a and the resolver harness 4a may be collected together to be the collective harness 61. Further, the collective harness 61 is connected to the external connector 62 attached to the left cover member 30 in the state where it passes through the window 11a of the motor housing 10. Since the external harness 303 is connected to the external connector 62, the detection signals of the temperature sensor 3 and the resolver 4 can be inputted into the controller 200 of the vehicle via the temperature sensor harness 3a, the resolver harness 4a, the collective harness 61, and the external harness 303.

Thus, by providing the external connector 62 in the left cover member 30, it becomes possible to input the detection signals of the temperature sensor 3 and the resolver 4 to the controller 200 without adopting the hollow shaft structure as in the conventional example. Further, since the temperature sensor harness 3a and the resolver harness 4a are collected together inside the motor housing 10, it is sufficient to only have the collective harness 61 pass through the window 11a, and it is sufficient to only have the collective harness 61 connect to the external connector 62. Therefore, when the temperature sensor harness 3a and the resolver harness 4a are provided, it becomes easier to facilitate a layout.

The above embodiment is merely illustrative in every aspect and must not be interpreted restrictively. Moreover, any modifications and/or changes within the scope of equivalency of the appended claims are within the scope of the present disclosure.

### Industrial Applicability

As described above, the vehicle drive system according to the present disclosure can be used in hybrid vehicles or electric vehicles, for example.

### DESCRIPTION OF REFERENCE CHARACTERS

- 1: Vehicle Drive System
- 2: Motor
- 3: Temperature Sensor
- 3a: Temperature Sensor Harness
- 4: Resolver
- 4a: Resolver Harness
- 10: Motor Housing
- 11: Housing-side Vertical Wall Part
- 11a: Window
- 12c: Opening Section
- 60: Coupling Part
- 62: External Connector
- 70: Lid Member
- 303: External Harness

## Claims

1. A vehicle drive system, including:
∘ a motor (2),
∘ a temperature sensor (3) configured to detect a temperature state of the motor, and
∘ a resolver (4) configured to detect a rotation state of the motor,
further comprising:
∘ a motor housing (10) accommodating the motor (2), the temperature sensor (3), and the resolver (4);
∘ a cover member (20) covering the motor housing (10) from one side in an axial direction of a motor rotation shaft (B);
∘ a temperature sensor harness (3a) connected to the temperature sensor (3); and
∘ a resolver harness (4a) connected to the resolver (4),
∘ wherein the temperature sensor harness (3a) and the resolver harness (4a) are integrally provided inside the motor housing (10);
∘ wherein the motor housing (10) includes a window (11a) through which a collective harness (61) of the temperature sensor harness (3a) and the resolver harness (4a) passes;
∘ wherein an external connector (62) connectable to an external harness (303) is attached to the cover member (20) to pass through the cover member (20); and
∘ wherein the external connector (62) is connected to a tip-end part of the collective harness (61).

2. The vehicle drive system of claim 1,
∘ wherein the motor housing (10) includes a housing-side vertical wall part (11) extending in a radial direction of the motor rotation shaft (B), and a housing-side circumferential wall part (12) projecting in the axial direction of the motor rotation shaft (B) from a circumferential edge portion of the housing-side vertical wall part (11) to extend annularly, and
∘ wherein the window (11a) is formed in the housing-side vertical wall part (11).

3. The vehicle drive system of claim 2,
∘ wherein the housing-side circumferential wall part (12) includes an opening section (12c) openable and closable by a lid member (70), and
∘ wherein a coupling part (60) integrally provides the temperature sensor harness (3a) and the resolver harness (4a) inside the motor housing (10).

4. The vehicle drive system of claim 3,
∘ wherein the resolver (4) is accommodated inside the motor housing (10) on a cover member (20) side, and
∘ wherein the temperature sensor (3) is accommodated inside the motor housing (10) on an opposite side from the cover member (20).

5. The vehicle drive system of claim 4,
∘ wherein the coupling part (60) is provided to an intermediate part of the temperature sensor harness (3a).

6. The vehicle drive system of claim 1,
∘ wherein the resolver (4) is accommodated inside the motor housing (10) on a cover member (20) side, and
∘ wherein the temperature sensor (3) is accommodated inside the motor housing (10) on an opposite side from the cover member (20).

7. The vehicle drive system of claim 6,
∘ wherein the coupling part (60) is provided to an intermediate part of the temperature sensor harness (3a).

8. The vehicle drive system of claim 1,
∘ wherein the cover member (20) includes a cover-side vertical wall part extending in a radial direction of the motor rotation shaft (B) and a cover-side circumferential wall part extending in a circumferential direction of the motor rotation shaft (B), and
∘ wherein the external connector (62) is attached to the cover-side circumferential wall part to pass therethrough.

9. The vehicle drive system of claim 8,
∘ wherein the cover member (20) accommodates a transmission (50) thereinside.

10. The vehicle drive system of claim 2,
∘ wherein the cover member (20) includes a cover-side vertical wall part extending in the radial direction of the motor rotation shaft (B) and a cover-side circumferential wall part extending in a circumferential direction of the motor rotation shaft (B), and
∘ wherein the external connector (62) is attached to the cover-side circumferential wall part to pass therethrough.

11. The vehicle drive system of claim 10,
∘ wherein the cover member (20) accommodates a transmission (50) thereinside.
